# EUROPEAN PATENT APPLICATION

(11) **EP 1 505 707 A2**
(43) Date of publication of application: **09.02.2005**
(21) Application number: 04017131.6
(22) Date of filing: 20.07.2004
(51) Int. Cl.: H02H 3/00, H02H 1/00

(54) **System linkage apparatus, setting apparatus for system linkage apparatus and method of setting set values of system linkage apparatus**

(30) Priority: 07.08.2003 JP 2003288447
(71) Applicant: Omron Corporation, Kyoto-shi, Kyoto 600-8530 (JP)
(72) Inventor: Kato, Masaya, Shiokoji-dori Shimogyo-ku Kyoto 600-8530 (JP); Toyoura, Nobuyuki, Shiokoji-dori Shimogyo-ku Kyoto 600-8530 (JP); Mabuchi, Masao, Shiokoji-dori Shimogyo-ku Kyoto 600-8530 (JP); Hosomi, Shinichi, Shiokoji-dori Shimogyo-ku Kyoto 600-8530 (JP)
(74) Representative: Kilian, Helmut, Dr.

(57) **Abstract**

A system linkage apparatus (4) having a set-value setting unit (32) for setting set values regarding each system protection, and a controller (34) for controlling the system protection based on the set values, and comprising a country-by-country set-value management table (16A) in which the set values regarding the system protection are previously stored on an country-by-country basis and a country-code identifying unit (31) foridentifyingacountryusingthesystemlinkageapparatus through a country-code input unit (19) and a GPS receiving unit (18) , in which when a country code is identified by the county identifying unit (31), the set-value setting unit (32) reads set values regarding the system protection and corresponding to the country code from the country-by-country set-value management table and sets the set values in the controller (34).

## Description

### BACKGROUND OF THE INVENTION

### Technical Field

The present invention relates to a system linkage apparatus provided with a function of setting set values such as system protection values for protecting a linkage operation and the like with an AC system (commercially available power 'supply) each country, electric power company or the like, a method of setting set values of the system linkage apparatus, and a setting apparatus for the system linkage apparatus, provided with a function of remotely setting set values corresponding to each area, in the system linkage apparatus.

### Related Prior Art

Conventionally, such system linkage apparatus operates with the AC system such as the commercially available power supply, such that it converts a DC power input from a DC power supply such as a solar battery to a AC power having the same nature as that of the commercially available power supply, supplies the AC power to a load and comprises an inverter circuit for reversely applying the power to the commercially available power supply when the AC power supplied to the load exceeds a consumption power of the load, a relay switch for opening or closing an output of the inverter circuit, and a control circuit for detecting an output voltage, an output frequency or the like of the inverter circuit and opening or closing the relay switch based on its detection result (refer to Japanese Unexamined Patent Publication No. 2001-95263, for example)

According to the above conventional system linkage apparatus, the output voltage, the output frequency or the like of the inverter circuit is detected and when the output voltage, for example becomes a reference value (set value) or more, it is determined that the output voltage is overvoltage, that is, there is a malfunction in the system linkage apparatus, and the connection between the system linkage apparatus and the AC system is shut off by turning off the relay switch, whereby the linkage operation can be protected.

In addition, set values such as linkage protection values for preventing the system from being affected by an abnormal output from the system linkage apparatus vary with standards of countries and electric power companies, for example. For example, as such values, there are a maximum permissible value (OV) and a minimum permissible value (UV) of the output voltage of the inverter circuit, and a maximum permissible value (OF) and a minimum permissible value (UF) of the output frequency of the inverter circuit, a system impedance sensitivity, a detection level of insulating resistance, a stabilized value, a linkage protection value of stabilization time or the like, font information of used language, and the like.

Therefore, according to the conventional system linkage apparatus, since the set values vary with countries and electric companies, it is necessary to set the set values corresponding to the country or the electric company which uses the system linkage apparatus.

In addition, as the prior art, there is known technique relating to the invention of a facsimile apparatus, in which setting specifications of the facsimile apparatus are previously set on a country-by-country basis, the setting specifications corresponding to the country using the facsimile apparatus is read and this read and set specifications are set although this is not the invention of the system linkage apparatus (Japanese Unexamined Patent Publication No. 2003-87540).

### DISCLOSURE OF THE INVENTION

However, according to the above conventional system linkage apparatus, since set values corresponding to the country or electric power company which uses the system linkage apparatus are set in a stage of manufacturing the system linkage apparatus, when the system linkage apparatus is used in another country or electric power company, it is necessary to set again the set values so as to correspond to that company or electric power company.

Furthermore, according to the above conventional system linkage apparatus, even if the set values corresponding to the country or electric power company which uses the system linkage apparatus are set again, since the setting contents of the setting values are complicated, the setting operation are very troublesome.

In addition, according to the above conventional facsimile apparatus, although there is disclosed the technique which previously stores the setting specifications on a country-by-country basis and sets the setting specifications corresponding to the country which uses the apparatus, contents of technique which sets complicated elements in the apparatus, special to the system linkage apparatus are not disclosed at all. In addition, although it is necessary to set complicated elements not only each country but also each area in the country in the system linkage apparatus, such technique is not also disclosed at all.

The present invention was made in view of the above problems and it is an object to provide a system linkage apparatus in which setting values such as linkage protection values corresponding to an area such as a country or an electric power company which uses the system linkage apparatus can be easily set, a method of setting set values of the system linkage apparatus and a setting apparatus for the system linkage apparatus.

In order to attain the above object, a system linkage apparatus according to the present invention comprises setting means for setting set values regarding each system protection, and controlling means for controlling the system protection based on the set values set by the setting means, and further comprises storing means for previously storing the set values regarding the system protection on an area-by-area basis and area identifying means for identifying a present area of the system linkage apparatus itself in which when a present area of the system linkage apparatus itself is identified by the area identifying means, the setting means reads set values regarding the systemprotection and corresponding to the present area, from the storing means and sets the set values.

The system linkage apparatus according to the present invention comprises input means for inputting area data, in which when area data is input by the input means, the area identifying means identifies the area data as the present area of the system linkage apparatus itself.

The system linkage apparatus according to the present invention comprises GPS receiving means for detecting area data from GPS data, and warning output means for outputting warning information, in which the area identifying means comprises area data determining means for determining whether the area data detected by the GPS receiving means coincides with the area data input by the input means or not, and the warning output means outputs the warning information when the area data determining means determines that the area data detected by the GPS receiving means does not coincide with the area data input by the input means.

The system linkage apparatus according to the present invention comprises GPS receiving means for detecting area data from GPS data, in which when area data is detected by the GPS identifying means, the area identifying means identifies the area data as the present area of the system linkage apparatus itself.

The system linkage apparatus according to the present invention comprises area data detecting means for detecting area data through a connection between an adapter and a socket of the system, in which when area data is detected by the area data detecting means, the area identifying means identifies the area data as the present area of the system linkage apparatus itself.

In addition, in order to attain the above object, a setting apparatus for a system linkage apparatus according to the present invention sets set values for controlling system protection of the system linkage apparatus in the system linkage apparatus and comprising communication connecting means for communicating with the system linkage apparatus, storing means for previously storing the set values regarding each system protection on an area-by-area basis, area identifying means for identifying a present area of the system linkage apparatus itself, and setting means for reading the set values regarding the system protection and corresponding to a present area of the system linkage apparatus identified by the area identifying means, from the storing means and for setting the set values in the system linkage apparatus through the communication connecting means.

The setting apparatus for the system linkage apparatus according to the present invention comprises input means for inputting area data, in which when area data is input by the input means, the area identifying means identifies the area data as the present area of the system linkage apparatus itself.

The setting apparatus for the system linkage apparatus according to the present invention comprises GPS receiving means for detecting area data from GPS data, in which the area identifying means comprises area data determining means for determining whether the area data detected by the GPS receiving means coincides with the area data input by the input means or not, and warning output means for outputting warning information when it is determined that the area data does not coincide with each other by the area data determining means.

The setting apparatus for the system linkage apparatus according to the present invention comprises GPS receivingmeans for detecting area data from GPS data, in which when area data is detected by the GPS receiving means, the area identifying means identifies the area data as the present area of the system linkage apparatus itself.

The setting apparatus for the system linkage apparatus according to the present invention comprises area data detecting means for detecting area data through a connection between an adapter and a socket of the system, in which when area data is detected by the area data detecting means, the area identifying means identifies the area data as the present area of the system linkage apparatus itself.

A method of setting set values of a system linkage apparatus according to the present invention sets set values for controlling each system protection and controls each system protection based on the above set values, in which set values regarding the system protection are previously stored on an area-by-area basis, and when a present area of the system linkage apparatus is identified, the set values regarding the system protection and corresponding to the present area are read and the set values are set.

According to the thus-constituted system linkage apparatus of the present invention, the set values regarding system protection are previously stored in the storing means on an area-by-area basis and when a present area of the system linkage apparatus itself is identified, the set values for the system protection corresponding to the present area is read from the storing means and the read and set values are set in. As a result, when the set values corresponding to an area such as a country or an electric power company are stored in the storing means, the set values corresponding to the area can be easily set in the systemlinkage apparatus without complicated setting operations.

In addition, according to the system linkage apparatus of the present invention, when the area data is input through the input means, the area data is identified as the present area of the system linkage apparatus. As a result, the set values corresponding to that area such as the country can be easily set only by inputting the country code, for example.

According to the system linkage apparatus of the present invention, when the area data is detected by the GPS receiving means, it is determined whether the area data is the same as the area data input through the input means or not, and when it is not, the warning information is output. As a result, when it is assumed that the area data obtained by GPS (Global Positioning System) is recognized as the present area, the user can recognize that the area data input through the input means is different from the present area based on the output of the warning information.

According to the system linkage apparatus of the present invention, when the area data is detected by the GPS receiving means, the area data is identified as the present area of the system linkage apparatus itself. As a result, the set values corresponding to that area, the country, for example can be automatically and easily set only by receiving the GPS data through the GPS.

According to the system linkage apparatus of the present invention, when the area data is detected through the connection between the adapter and the socket of the system, the area data is identified as the present area of the system linkage apparatus itself. That is, because the configuration of the connection surface of the socket differs in standard in each country, this standard is used to recognize the present area, the present country, for example. As a result, the set values corresponding to that area, the present country, for example can be easily set only by connecting the socket of the system and the adapter.

According to the setting apparatus of the system linkage apparatus of the present invention, since it is communicated with the system linkage apparatus, the set values corresponding to the present area of the system linkage apparatus are read and the set values are set in the system linkage apparatus, the set values corresponding to the area can be remotely set in the system linkage apparatus by the simple operations without employing a function of setting the set values corresponding to the area in the system linkage apparatus.

In addition, according to the setting apparatus for the system linkage apparatus of the present invention, when the area data is input through the input means, the area data is identified as the present area of the system linkage apparatus. As a result, the set values corresponding to that area such as the country can be easily set only by inputting the country code, for example.

According to the setting apparatus for the system linkage apparatus of the present invention, when the area data is detected by the GPS receiving means, it is determined whether the area data is the same as the area data input through the input means or not, and when it is not, the warning information is output. As a result, when it is assumed that the area data obtained by GPS is recognized as the present area, the user can recognize that the area data input through the input means is different from the present area based on the output of the warning information.

According to the setting apparatus for the system linkage apparatus of the present invention, when the area data is detected by the GPS receiving means, the area data is identified as the present area of the system linkage apparatus itself. As a result, the set values corresponding to that area, the country, for example can be remotely and easily set only by receiving the GPS data through the GPS.

According to the setting apparatus for the system linkage apparatus of the present invention, when the area data is detected through the connection between the adapter and the socket of the system, the area data is identified as the present area of the system linkage apparatus itself. That is, because the configuration of the connection surf ace of the socket differs in standard in each country, this standard is used to recognize the present area, the present country, for example. As a result, the set values corresponding to that area, the present country, for example can be easily set by connecting the socket of the system and the adapter.

In order to attain the above object, according to the method of setting set values of the system linkage apparatus of the present invention, the set values regarding system protection are previously stored on an area-by-area basis and when a present area of the system linkage apparatus itself is identified, the set values for the system protection corresponding to the present area are read and the read and set values are set in. As a result, when the set values corresponding to the country or electric power company, for example are stored, the set values corresponding to the area can be easily set in the system linkage apparatus without complicated setting operations.

### BRIEF DESCRIPTION OF THE DRAWINGS

Fig. 1 shows a block diagram showing a schematic constitution of an entire system linkage system comprising a system linkage apparatus according to an embodiment of the present invention.
Fig. 2 shows an explanatory view simply showing table contents in a country-by-country set-value management table according to the embodiment.
Fig. 3 shows a block diagram showing a schematic constitution in a control circuit which is an essential part of the system linkage apparatus according to the embodiment.
Fig. 4 shows a flowchart showing processing operations in the control circuit regarding country-by-country set-value setting processing of the system linkage apparatus according to the embodiment.
Fig. 5 shows a flow chart showing processing operations in the control circuit regarding an overvoltage protecting process of the system linkage apparatus according to the embodiment.
Fig. 6 shows an explanatory view simply showing another method of identifying a country code of the system linkage apparatus according to the embodiment.
Fig. 7 shows a front view showing a socket adapter of the system linkage apparatus according to the embodiment, in which Fig. 7A shows a front view showing a socket adapter, Fig. 7B shows a front view showing the socket adapter used in Germany, and Fig. 7C shows a front view showing the socket adapter used in Japan.
Fig. 8 shows a block diagram showing a schematic constitution in a system linkage system according to another embodiment.

### DESCRIPTION OF THE PREFERRED EMBODIMENTS

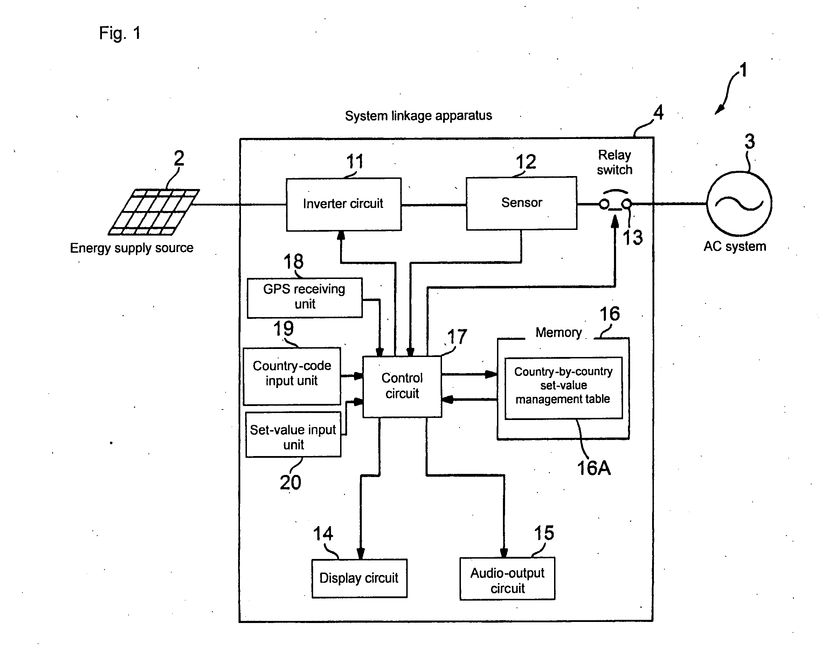

Hereinafter, a description is made of a system linkage system showing an embodiment in a system linkage apparatus of the present invention with reference to the drawings. Fig. 1 is a block diagram showing a schematic constitution in the system linkage system showing the embodiment of the present invention.

A system linkage system 1 shown in Fig. 1 comprises an energy supply source 2 (PV and the like) such as a solar buttery, a commercially available AC system 3, and a system linkage apparatus 4 arranged between the energy supply source 2 and the AC system 3, for converting a power from the energy supply source 2 to an AC power, supplying the AC power to a load such as a household electric appliance (not shown) and supplying a surplus AC power to the AC system 3.

In addition, although the load receives the power supply from the system linkage apparatus 4, when the output power of the system linkage apparatus 4 is less than a driving power of the load, it receives a power supply from the AC system 3 in addition to the power supply from the system linkage apparatus 4.

The system linkage apparatus 4 comprises an inverter circuit 11 for converting the power from the energy supply source 2 to the AC power, a sensor 12 for detecting an output voltage, an output frequency and the like of the inverter circuit 11, a relay switch 13 for linking the inverter circuit 11 to the AC system 3, a display circuit 14 for displaying various information, an audio output circuit 15 for audio-outputting the various information, a memory 16 for storing and managing the various information, and a control circuit 17 for controlling the entire system linkage apparatus 4.'

Still further, the system linkage apparatus 4 comprises a GPS receiving unit 18 for receiving GPS data from a GPS satellite (not shown) and detecting a country code showing the present position of the county from the GPS data, a country-code input unit 19 for inputting the country code, and a set-value input unit 20 for inputting various set values.

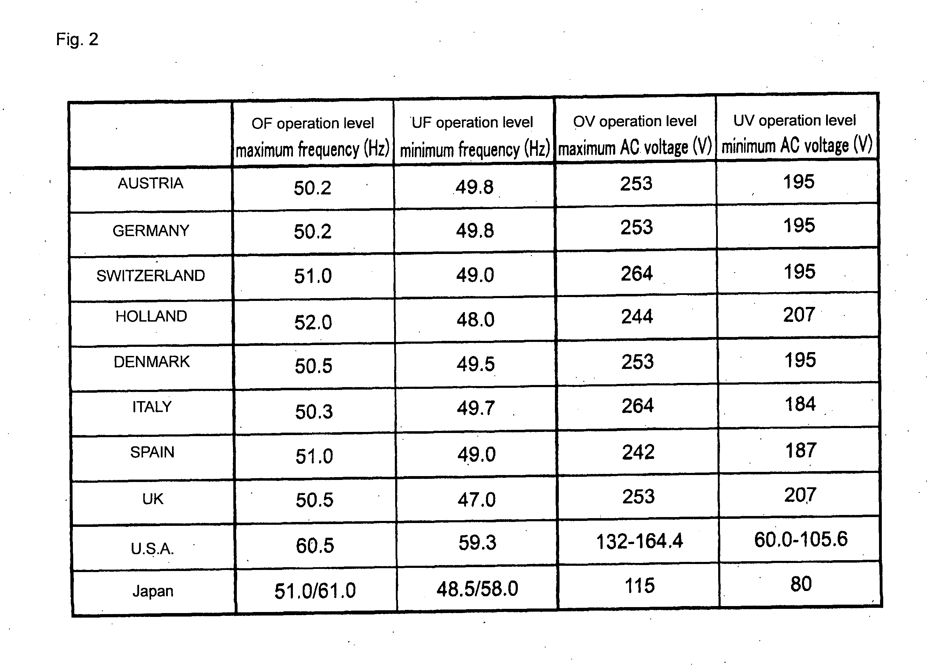

In addition, in the memory 16, a country-by-country set-value management table 16A is registered, in which set values of linkage protection values such as a maximum permissible value (OF) and a minimum permissible value (UF) regarding the output frequency of the inverter circuit 11, a maximum permissible value (OV) and a minimum permissible value (UV) regarding the output voltage thereof and the like are stored and managed on a country-by-country basis as shown in Fig. 2.

In addition, it is assumed that system impedance sensitivity, a detection level of insulating resistance, a stabilized value, a system protection value of stabilization time, a set value of font information of used languages, information regarding the system protection such as presence or absence of ENS, or local information are stored and managed in the country-by-country set-value management table 16A, although those are not shown, other than the maximum permissible value (OF) and the minimum permissible value (UF) of the output frequency, the maximum permissible value (OV) and the minimum permissible value (UV) of the output voltage.

As shown in Fig. 2, the country-by-country set values vary with the standard of country. For example, regarding the maximum permissible value (OV) of the inverter circuit 11, it is 253V in German while it is 115V in Japan.

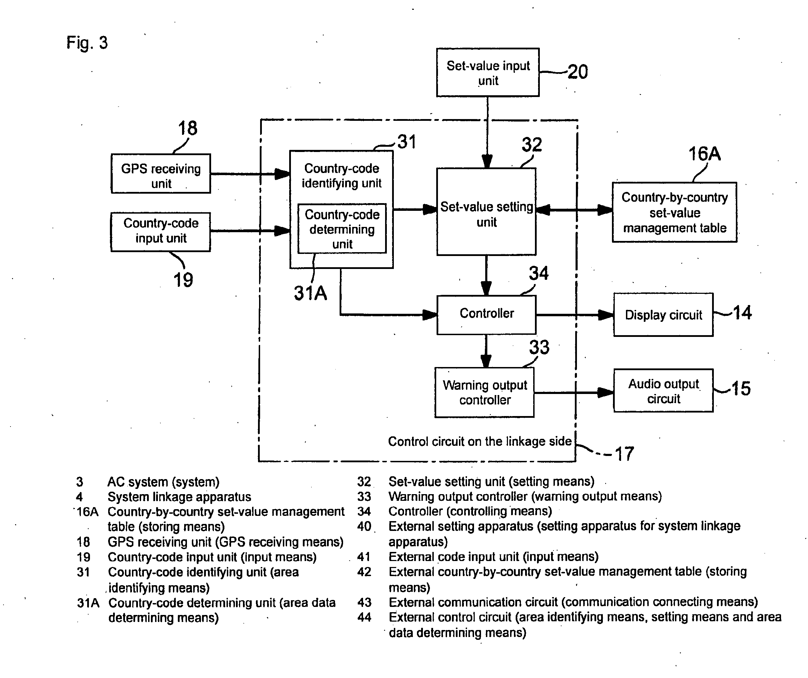

Fig. 3 is a block diagram showing a schematic constitution in the control circuit 17 of the system linkage apparatus 4.

The control circuit 17 shown in Fig. 3 comprises a country-code identifying unit 31 for identifying a country code through the GPS receiving unit 18 or the country-code input unit 19, a set-value setting unit 32 for reading set values corresponding to the country code identified by the country-code identifying unit 31 from the country-by-country set-value management table 16A and setting the read set values, a warning output controller 33 for outputting warning information through the audio output circuit 15, and a controller 34 for controlling the entire control circuit 17, that is, the entire system linkage apparatus 4.

In addition, since the country-code identifying unit 31 recognizes the country code of the present position of the system linkage apparatus 4 through the GPS receiving unit 18, it comprises a country-code determining unit 31A for determining whether the country code set at the present actually coincides with a code received through the GPS receiving unit 18 or not. In addition, it is assumed that the GPS receiving unit 18 can accurately receive the country code of the country in which the system linkage apparatus 4 actually exists.

When the set values corresponding to the country code are set at the set-value setting unit 32, the controller 34 controls the display circuit 14 so as to display setting circumstances corresponding to that country code. Thus, a user can recognize the present setting circumstances based on contents displayed in the display circuit 14.

It should be noted that, in claims, setting means corresponds to the set-value setting unit 32, controlling means corresponds to the controller 34, storing means corresponds to the country-by-country set-value management table 16A, area identifying means corresponds to the country-code identifying unit 31, input means corresponds to the country-code input unit 19, GPS receiving means corresponds to the GPS receiving unit 18, area data determining means corresponds to the country-code determining unit 31A, warning output means corresponds to the warning output controller 33, and a system corresponds to the AC system 3.

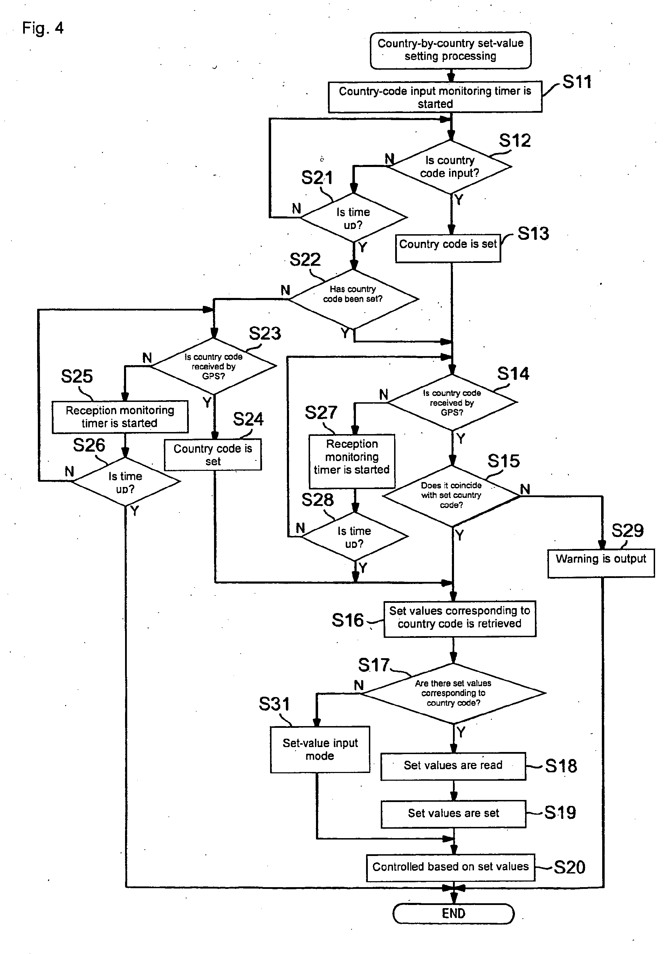

Next, a description is made of operations of the system linkage system 1 according to this embodiment. Fig. 4 is a flowchart showing processes in the control circuit 17 regarding country-by-country set-value setting processing of the system linkage apparatus 4.

According to the country-by-country set-value setting processing shown in Fig. 4, the country code used in the system linkage apparatus 4 is identified and set values corresponding to that country code are automatically set in the system linkage apparatus 4.

When the control circuit 17 in Fig. 4 starts the country-by-country set-value setting processing, a country-code input monitoring timer for monitoring the input of the country code through the country-code input unit 19 is started at step S11.

The control circuit 17 determines whether a country code is input through the country-code input unit 19 or not at step S12.

When the country code is input through the country-code input unit 19, the country-code identifying unit 31 of the control circuit 17 sets this country code as the country which uses the system linkage apparatus 4 at step S13 and then it receives GPS data from the GPS satellite through the GPS receiving unit 18 and determines whether a country code is detected from the GPS data or not at step S14.

When the country-code identifying unit 31 detects a country code through the GPS receiving unit 18, the country-code determining unit 31A determines whether the country code which has already set coincides with the country code detected by the GPS receiving unit 18 or not, that is, it determines whether the country code already set is right or not at step S15.

When it is determined that the set country code coincides with the country code detected by the GPS receiving unit 18 and determined that the set country code is right, the set-value setting unit 32 of the control circuit 17 starts to search for set values corresponding to this country code from the country-by-country set-value management table 16A at step S16.

When the set-value setting unit 32 starts to search for set values corresponding to the country code, it determines whether set values corresponding to this country code exist in the country-by-country set-value management table 16A or not at step S17.

When it is determined that the set values corresponding to the country code exist, the set-value setting unit 32 reads this set values from the country-by-country set-value management table 16A at step S18 and sets the set values in the controller 34 at step S19.

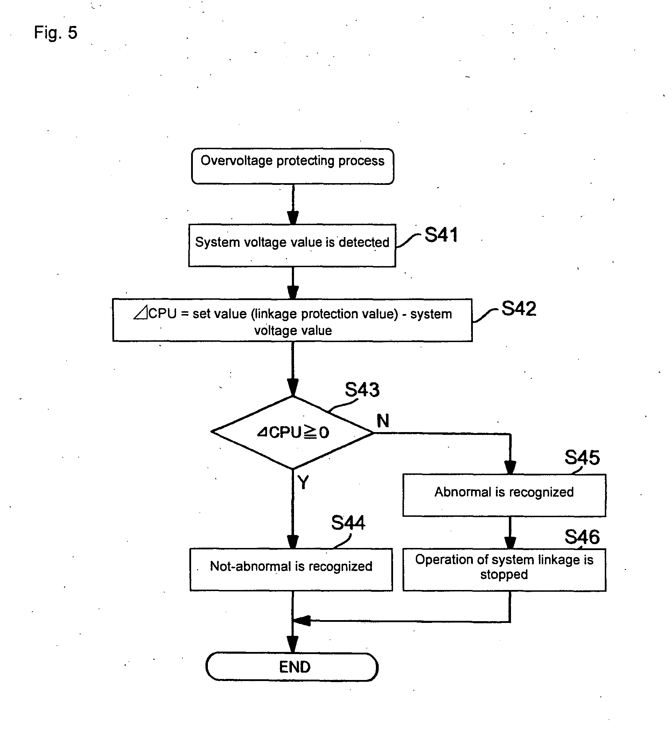

The controller 34 caries out various control operations such as an overvoltage protecting process shown in Fig. 5, for example based on the set values at step S20 and completes the country-by-country set-value setting processing.

Alternatively, when a country code is not input at step 'S12, the country-code identifying unit 31 determines whether time of the country-code input monitoring timer started at step S11 is up or not at step S21.

When the time of the country-code input monitoring timer is not up, the country-code identifying unit 31 monitors input of a country code at step S12.

Alternatively, when the time of the country-code input monitoring timer is up at step S21, it is determined whether a country code has been set or not at step S22. The case where a country code has been set at step S22 means that the country code set at previous time is left.

When the country code has been set, the country-code identifying unit 31 detects the country code from the GPS receiving unit 18 at step S14.

Alternatively, if a country code has not been set yet at step S22, the country-code identifying unit 31 determines whether a country code is detected or not through the GPS receiving unit 18 at step S23.

When a country code is detected at step S23, the country-code identifying unit 31 sets the detected country code at step S24 and searches for a set value corresponding to this country code at step S16.

Alternatively, if a country code is not detected at step S23, the country-code identifying unit 31 starts to a reception monitoring timer to monitor detection of a country code by the GPS receiving unit 18 at step S25 and determines whether time of the reception monitoring timer is up or not at step S26.

When the time of the reception monitoring timer is up, since the country-code identifying unit 31 cannot detect a country code from the GPS receiving unit 18, that is, it cannot set a country code, the country-by-country set-value setting processing is completed.

If the time of the reception monitoring timer is not up at step S26, the country-code identifying unit 31 monitors detection of a country code at step S23.

If a country code is not detected at step S14, the country-code identifying unit 31 starts the reception monitoring timer at step S27 and determines whether the time of the reception monitoring timer is up or not at step S28.

When the time of the reception monitoring timer is up, the country-code identifying unit 31 searches for a set value corresponding to the country code which has been set, at step S16.

Alternatively, when the time of the reception monitoring timer is not up at step S28, the country-code identifying unit 31 monitors detection of a country code at step S14.

In addition, when the country code which has been set does not coincide with the country code detected by the GPS receiving unit 18 at step S15, the warning output controller 33 of the control circuit 17 determines that the set country code is different from the country which uses the apparatus and carries out the warning output operation so that the display circuit 14 displays that effect as warning information or the audio output circuit 15 audio-outputs that effect as warning information at step S29. The user can recognize that the set country code is different from the country using the system linkage apparatus 4 based on the warning information.

After the warning information is audio-output at step S29, the country-code identifying unit 31 completes the country-by-country set-value setting processing. Although this country-by-country set-value setting processing is completed after the warning information is output at step S29, the operation may move into a set-value input mode in which the set values are input through the set-value input unit 20, for example, and then the operation may move to step S20 in which the control operation is carried out based on the set values. Similarly, the country code detected by the GPS receiving unit 18 may be newly set and set values corresponding to this country code may be retrieved at step S16.

When set values corresponding to the country code do not exist at step S17, the value setting unit 32 moves into a set-value input mode in which set values are input through the set-value input unit 20 at step S31 to input set values in this set-value input mode and then the control operation based on the set values is carried out at step S20. In addition, although the set-value input mode is not shown, it is an operation mode for inputting the set values manually through the set-value input unit 20.

According to the country-by-country set-value setting processing shown in Fig. 4, a country code used in the system linkage apparatus 4 is identified and set values corresponding to this country code is read from the country-by-country set-value management table 16A and the set values are set in the controller 34, so that the set values corresponding to the country which uses the system linkage apparatus 4 can be easily set.

Next, a description is made of the overvoltage protecting process which monitors the set value such as a maximum permissible amount regarding the output voltage of the inverter circuit 11, for example after the set value corresponding to the country is set in the system linkage apparatus 4. Fig. 5 is a flowchart showing processing in the control circuit 17 regarding the overvoltage protecting process.

According to the overvoltage protecting process shown in Fig. 5, the output voltage of the inverter circuit 11 is monitored through the sensor 12, it is determined whether the monitored result is not less than the set value, that is, the maximum permissible value, and when it is determined that the monitored result is not less than the maximum permissible value, generation of the overvoltage is recognized, it is determined that the system linkage apparatus 4 itself is abnormal, and connection to the AC system 3 is shut off by turning the relay switch 13 off.

In Fig. 5, the control circuit 17 detects the output voltage of the inverter circuit 11 through the sensor 12 as a system voltage value at step S41.

The control circuit 17 subtracts the system voltage value detected at step S41 from the set value, that is, the maximum permissible value (OV) regarding the output voltage of the inverter circuit 11 at step S42 and determines whether the result 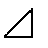 CPU is not less than zero at step S43.

When it is determined that the result 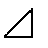 CPU is not less than zero, the control circuit 17 recognizes that the system linkage apparatus 4 is normal at step S44 and this process in completed.

Alternatively, when it is determined that the result 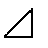 CPU is less than zero, the control circuit 17 determines that the system linkage apparatus 4 has overvoltage, that is, it is abnormal at step S45 and stops the operation of the system linkage by turning off the relay switch 13 and shutting off the connection with the AC system 3 at step S46, and then this process is completed.

According to the overvoltage protecting process shown in Fig. 5, the output voltage of the inverter circuit 11 is monitored, it is determined whether the monitored result is not less than the set value, that is, the maximum permissible value, and when it is determined that the monitored result is not less than the maximum permissible value, it is determined that the system linkage apparatus 4 itself is abnormal, and the connection with the AC system 3 is shut off by turning off the relay switch 13, so that the abnormity of the system linkage apparatus 4 caused by the overvoltage of the inverter circuit 11 can be surely prevented.

According to this embodiment, the set values regarding system protection are previously set in the country-by-country set-value management table 16A and when the country using the system linkage apparatus 4 is identified, the set values for the system protection corresponding to that country are read from the country-by-country set-value management table 16A and the read and set values are set in the controller 34. As a result, when the set values corresponding to the country are stored in the country-by-country set-value management table 16A, the set values corresponding to the country can be easily set in the system linkage apparatus 4 without complicated setting operations.

In addition, according to this embodiment, when the country code is input through the country-code input unit 19, the country code can be identified as the country using the system linkage apparatus 4. As a result, the set values corresponding to that country can be easily set only by inputting the country code.

Furthermore, according to this embodiment, when the country code is detected by the GPS receiving unit 18, it is determined whether the country code is the same as the country code input through the country-code input unit 19 or not, and when it is not, the warning information is output. As a result, when it is assumed that the country code obtained by GPS (Global Positioning System) is recognized as the country which uses the system linkage apparatus 4 at present, the user can recognize that the country code input through the country-code input unit 19 is not the country which uses the system linkage apparatus 4 at present based on the warning information.

According to this embodiment, when the country code is detected by the GPS receiving unit 18, the country code is identified as the country using the system linkage apparatus 4 at present. As a result, the set values corresponding to the country code can be automatically and easily set only by detecting the country code through the GPS receiving unit 18.

In the embodiment described above, although the country code is input from the country-code input unit 19 and then the country using the system linkage apparatus 4 at present is checked by the GPS receiving unit 18 and the country-code determining unit 31A, and finally the country code detected by the GPS receiving unit 18 is automatically set as the country using the system linkage apparatus 4 at present, there is a case where set values of another country are set in the country using the system linkage apparatus 4 at present to be tested, that is, a case where set values of Australia are set in German for testing.

In this case, the country code which has been set already is maintained without setting the country code detected by the GPS receiving unit 18 regardless of the result of the determination by the country-code determining unit 31A, so that the present invention can correspond to the test in which the set values of another country are set in the system linkage apparatus 4 in the country using the system linkage apparatus 4 at present.

Still further, although the country code of the country using the system linkage apparatus 4 is obtained by the country-code input unit 19 or the GPS receiving unit 18, for example according to this embodiment, either one of the country-code input unit 19 or the GPS receiving unit 18 may be used, or the country code may be input by a DIP switch and the like.

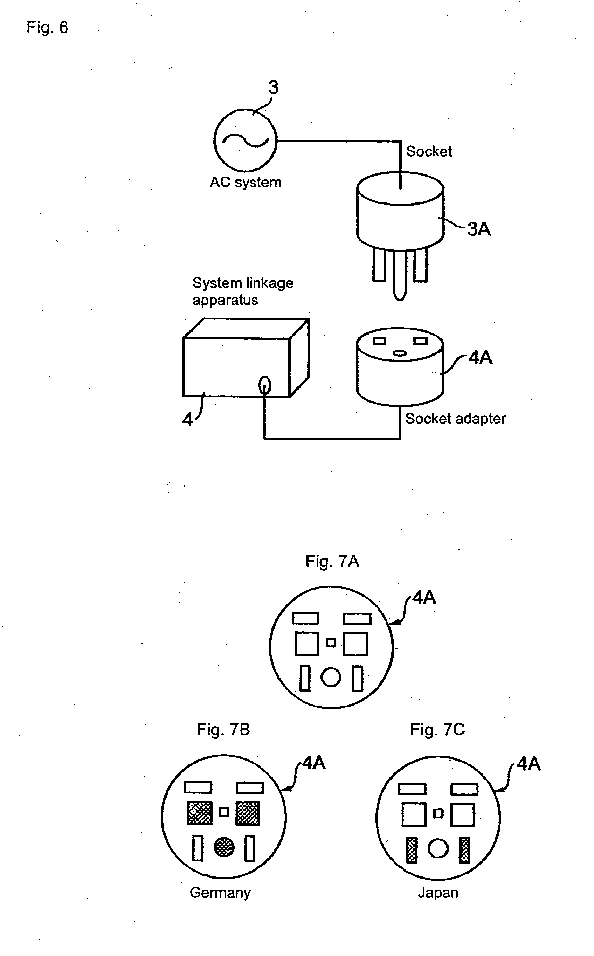

In addition, according to this embodiment, focusing on the fact that a configuration of a connection part of a socket 3A at the AC system 3 differs by standard in each country as shown in Figs. 6 and 7, the country code corresponding to the country which uses the apparatus at present may be obtained depending on a connection state between the socket 3A and the socket adapter 4A of the system linkage apparatus 4.

As shown in Fig. 7A, the connection surface of the socket adapter 4A of the system linkage apparatus 4 has holes which can be connected to the socket 3A of the AC system 3 of any country. For example, when it is connected to the socket 3A of the AC system 3 used in Germany, the connection holes shown by shaded portions in Fig. 7B are used, and when it is connected to the socket 3A of the AC system 3 used in Japan, the connection holes shown by shaded portions in Fig. 7C are used.

Since the control circuit 17 of the system linkage apparatus 4 recognizes the country code corresponding to the country which uses the system linkage apparatus 4 at present depending on the used state of the connection holes of the socket adapter 4A by connecting the socket adapter 4A to the socket 3A of the AC system. That is, because the configuration of the connection surface of the socket 3A differs in standard in each country, this standard is used to recognize the country using the apparatus. As a result, the set values corresponding to the country using the system linkage apparatus 4 can be easily set only by connecting the socket 3A of the AC system and the socket adapter 4A.

Besides, although system linkage apparatus 4 comprises the country-by-country set-value management table 16A which stores and manages the set values in each country, the GPS receiving unit 18 which obtains the country code and the country-code input unit 19 in the above embodiment, an external setting apparatus which communicates with the system linkage apparatus 4 may be provided and. the set values corresponding to the country may be set in the system linkage apparatus 4 by setting operations from this external setting apparatus.

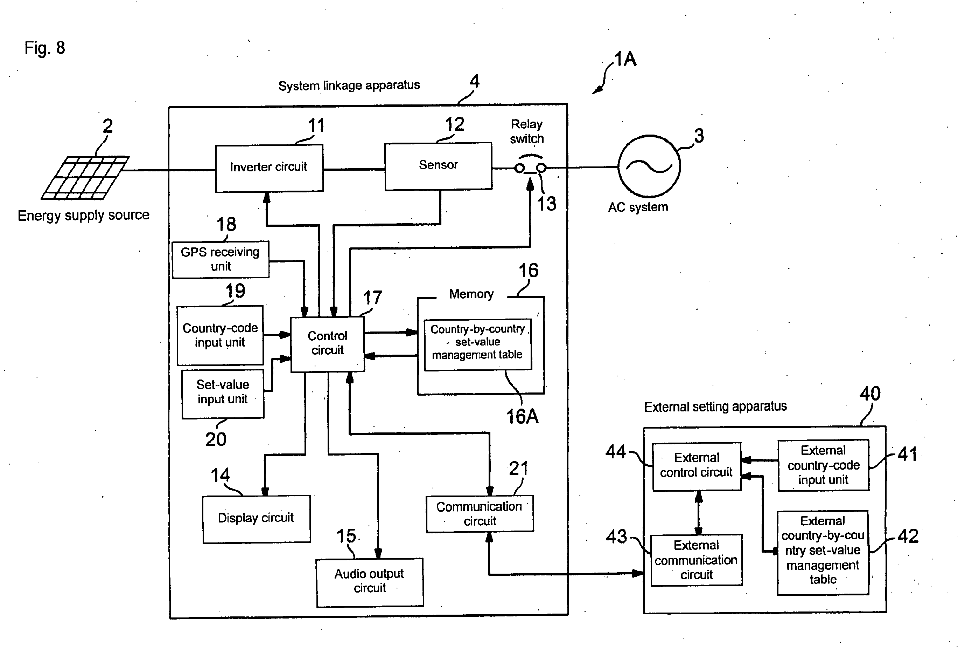

A description is made of a system linkage system showing another embodiment in which such external setting apparatus is provided. Fig. 8 is a block diagram showing a schematic constitution in the system linkage system showing another embodiment. The same signs are allotted to the same components as in the system linkage system 1 shown in Fig. 1 and their constitutions and operations are omitted.

A system linkage system 1A shown in Fig. 8 comprises an external setting apparatus 40 which communicates with a system linkage apparatus 4 and this external setting apparatus 40 sets values corresponding to the country which uses the system linkage apparatus 4, in the system linkage apparatus 4 by remote operations. In addition, the external setting apparatus 40 is a terminal apparatus such as a personal computer, a mobile phone and the like.

The external setting apparatus 40 comprises an external country-code input unit 41 for inputting the country code, an external country-by-country set-value management table 42 which stores and manages the set values every country, an external communication circuit 43 which communicates with the system linkage apparatus 4, and an external control circuit 44 which controls the entire external setting apparatus 40.

The system linkage apparatus 4 comprises a communication circuit 21 which communicates with the external communication circuit 43 of the external setting apparatus 40.

It should be noted that, in claims, a setting apparatus for a system linkage apparatus corresponds to the external setting apparatus 40, communicating means corresponds to the external communication circuit 43, storing means corresponds to the external country-by-country set-value management table 42, area identifying means, setting means and area data determining means correspond to the external control circuit 44, and input means corresponds to the external country-code input unit 41.

When a country code is input through the external country-code input unit 41, the external setting apparatus 40 reads set values corresponding to the country code from the external country-by-country set-value management table 42 and transmits the set values corresponding to the country code to the system linkage apparatus 4 through the external communication circuit 43.

When the control circuit 17 of the system linkage apparatus 4 receives the set values from the external setting apparatus 40 through the communication circuit 21, the control circuit 17 sets the set values.

According to the system linkage system 1A shown in Fig. 8, since the set values corresponding to a given country can be set in the system linkage apparatus 4 from the outside by the external setting apparatus 40, the set values of the system linkage apparatus 4 can be easily set by remote operations from the external setting apparatus 40.

In addition, according to the system linkage system 1A shown in Fig. 8, although the country-by-country set-value management table 16A is provided in the system linkage apparatus 4, since the external country-by-country set-value management table 42 having the same contents as those in the table 16A is also provided in the external setting apparatus 40, the country-by-country set-value management table 16A in the system linkage apparatus 4 may be deleted. In this case, memory loads in the system linkage apparatus 4 can be considerably decreased.

Although the external country-code input unit 41 is provided in the external setting apparatus 40 and the country code corresponding to the country which uses the system linkage apparatus 4 is identified by the external country-code input unit 41 in the above embodiment, a GPS receiving unit may be provided in the external setting apparatus 40 itself, for example to detect the country code, or a socket adapter to be connected to the socket of the AC system 3 may be provided in the external setting apparatus 40 to identify the country code depending on the used state of the socket adapter.

Although the set values are stored and managed by the country code in the above embodiments, the set values may be stored and managed by the area or electric power company when the set values vary with the area or electric power company. In this case, the set values corresponding to the area or electric power company can be set in the system linkage apparatus 4 by simple operations. For example, the set values vary with an area or a state in U.S.A. For example, the set values in California are totally different from those in North Carolina.

In addition, the country code and the set values can be input from the user through the country-code input unit 19 and the set-value input unit 20, respectively in the above embodiments. However, if anyone can input the country code or the set values, some problems could occur, so that input operations may be controlled with password so as to prevent free input operations by the country-code input unit 19 or the set-value input unit 20, for example.

According to the system linkage apparatus, the method of setting set values of the system linkage apparatus and the setting apparatus for the system linkage apparatus of the present invention, the set values regarding the system protection are previously stored on an area-by-area basis and when the present area of the system linkage apparatus is identified, set values regarding the systemprotection and corresponding to the present area are read and that set values are set in the system linkage apparatus itself, which are useful for the system linkage system using the system linkage apparatus in which set values vary with an area.

## Claims

1. A system linkage apparatus having setting means for setting set values regarding each system protection, and controlling means for controlling the system protection based on the set values set by the setting means, **characterized in that** the system linkage apparatus comprises:
storing means for previously storing the set values regarding the system protection on an area-by-area basis; and
area identifying means for identifying a present area of the system linkage apparatus itself;
wherein when a present area of the system linkage apparatus itself is identified by the area identifying means, the setting means reads set values regarding the system protection and corresponding to the present area from the storing means and sets the set values.

2. The system linkage apparatus according to claim 1, comprising input means for inputting area data, **characterized in that** when area data is input by the input means, the area identifying means identifies the area data as the present area of the system linkage apparatus itself.

3. The system linkage apparatus according to claim 2, comprising GPS receiving means for detecting area data from GPS data, and warning output means for outputting warning information, **characterized in that** the area identifying means comprises area data determining means for determining whether the area data detected by the GPS receiving means coincides with the area data input by the input means or not, and the warning output means outputs the warning information when the area data determining means determines that the area data detected by the GPS receiving means does not coincide with the area data input by the input means.

4. The system linkage apparatus according to claim 1, comprising GPS receiving means for detecting area data from GPS data, **characterized in that** when area data is detected by the GPS identifyingmeans, the area identifyingmeans identifies the area data as the present area of the system linkage apparatus itself.

5. The system linkage apparatus according to claim 1, comprising area data detecting means for detecting area data through a connection between an adapter and a socket of the system, **characterized in that** when area data is detected by the area data detecting means, the area identifying means identifies the area data as the present area of the system linkage apparatus itself.

6. A setting apparatus for a system linkage apparatus, which sets set values for controlling system protection of the system linkage apparatus, in the system linkage apparatus, comprising:
communication connecting means for communicating with the system linkage apparatus;
storing means for previously storing set values regarding each system protection on an area-by-area basis;
area identifying means for identifying a present area of the system linkage apparatus itself; and
setting means for reading the set values regarding the system protection and. corresponding to a present area of the system linkage apparatus identified by the area identifying means, from the storing means and for setting the set values in the system linkage apparatus through the communication connecting means.

7. The setting apparatus for the system linkage apparatus according to claim 6, comprising input means for inputting area data, **characterized in that** when area data is input by the input means, the area identifying means identifies the area data as the present area of the system linkage apparatus itself.

8. The setting apparatus for the system linkage apparatus according to claim 7, comprising GPS receiving means for detecting area data from GPS data, **characterized in that** the area identifying means comprises area data determining means for determining whether the area data detected by the GPS receiving means coincides with the area data input by the input means or not, and warning output means for outputting warning information when it is determined that the area data do not coincide with each other by the area data determining means.

9. The setting apparatus for the system linkage apparatus according to claim 6, comprising GPS receiving means for detecting area data from GPS data, **characterized in that** when area data is detected by the GPS receiving means, the area identifying means identifies the area data as the present area of the system linkage apparatus itself.

10. The setting apparatus for the system linkage apparatus according to claim 6, comprising area data detecting means for detecting area data through a connection between an adapter and a socket of the system, **characterized in that** when area data is detected by the area data detecting means, the area identifying means identifies the area data as the present area of the system linkage apparatus itself.

11. A method of setting set values of a system linkage apparatus, which sets set values for controlling each system protection and controls each system protection based on the set values, **characterized in that** set values regarding the system protection are previously stored on an area-by-area basis, and when a present area of the system linkage apparatus is identified, the set values regarding the systemprotection and corresponding to the present area are read and the set values are set.
